(19) Europäisches Patentamt
European Patent Office
Office européen des brevets

(11) EP 4 324 868 A1

(12) **EUROPEAN PATENT APPLICATION**
published in accordance with Art. 153(4) EPC

(43) Date of publication:
**21.02.2024 Bulletin 2024/08**

(21) Application number: **22825395.1**

(22) Date of filing: **20.06.2022**

(51) International Patent Classification (IPC):
***C08J 3/24*** *(2006.01)* ***C08J 3/12*** *(2006.01)*
***C08J 3/075*** *(2006.01)* ***C08F 220/06*** *(2006.01)*
***B29B 9/12*** *(2006.01)* ***C08F 2/01*** *(2006.01)*

(52) Cooperative Patent Classification (CPC):
**B29B 9/12; C08F 2/01; C08F 220/06; C08J 3/075; C08J 3/12; C08J 3/24**

(86) International application number:
**PCT/KR2022/008709**

(87) International publication number:
**WO 2022/265472 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 KR 20210079644**
**21.06.2021 KR 20210080336**

(71) Applicant: **LG Chem, Ltd.**
**Seoul 07336 (KR)**

(72) Inventors:
- **HAN, Sangwon**
  **Daejeon 34122 (KR)**
- **KIM, Gicheul**
  **Daejeon 34122 (KR)**
- **PARK, Se Yeol**
  **Daejeon 34122 (KR)**
- **KIM, Tae Yun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) PREPARATION METHOD OF SUPER ABSORBENT POLYMER, AND SUPER ABSORBENT POLYMER

(57) This invention relates to a method for preparing super absorbent polymer and the super absorbent polymer. More specifically, this invention relates to a method for preparing a super absorbent polymer that can inhibit generation of fine particles during the preparation process, and simultaneously, realize excellent vortex time, by controlling the process conditions of a drying step to prepare base resin powder having relatively high moisture content, and the super absorbent polymer.

EP 4 324 868 A1

## Description

[Technical Field]

Cross-reference to Related Application

This application claims the benefit of Korean Patent Application No. 10-2021-0079644 filed on June 18, 2021, Korean Patent Application No. 10-2021-0080336 filed on June 21, 2022, and Korean Patent Application No. 10-2022-0074722 filed on June 20, 2022, with the Korean Intellectual Property Office, the disclosures of which are herein incorporated by reference in their entirety.

This invention relates to a method for preparing super absorbent polymer and super absorbent polymer. More specifically, this invention relates to a method for preparing super absorbent polymer that can inhibit generation of fine particles during the preparation process, and simultaneously, realize excellent vortex time, by controlling the process conditions of a drying step to prepare base resin powder having relatively high moisture content, and super absorbent polymer.

[Background Art]

Super absorbent polymer (SAP) is synthetic polymer material that can absorb moisture of 500 to 1000 times of self-weight, and is also named differently as super absorbency material (SAM), absorbent gel material (AGM), etc. according to developing companies. The super absorbent polymer began to be commercialized as sanitary items, and currently, it is being widely used as water-holding material for soil, water stop material for civil engineering and architecture, sheets for raising seedling, freshness preservatives in the field of food circulation, fomentation material, and the like.

Such super absorbent polymer is mainly used in the field of hygienic goods such as diapers, sanitary pads, and the like. In general, in the hygienic goods, the super absorbent polymer is included while being dispersed in pulp. However, recently, there are continued attempts to provide hygienic goods such as diapers with thinner thickness, and as a part of them, development of hygienic goods having reduced pulp content, or pulpless hygienic goods are being actively progressed.

As such, in the case of hygienic goods having reduced pulp content or pulpless hygienic goods, super absorbent polymer is included at relatively high rate, and thus, super absorbent polymer particles are inevitably included in multilayers in the hygienic goods. The super absorbent polymer should exhibit rapid absorption speed as well as high absorption capacity, so that the whole super absorbent polymer particles included in multilayers may efficiently absorb a large quantity of liquid such as urine.

Such super absorbent polymer is generally prepared through the steps of polymerizing monomers to prepare hydrogel polymer containing a large quantity of moisture, and drying such hydrogel polymer and grinding it to resin particles having desired particle diameters. However, in case a grinding process is conducted after drying hydrogel polymer as described above, a large quantity of fine particles may be generated to deteriorate the properties of the finally prepared super absorbent polymer.

Meanwhile, in case the moisture content of super absorbent polymer is increased, fine particles due to crushing of the product may decrease, the unit cost of the product may be lowered, and vortex time may be improved.

In order to achieve such advantages of high moisture content, previously, additional hydration process equipment was installed in surface crosslinking equipment, and water was introduced therein, but since it was additional equipment, economical feasibility was low, and when water was used alone, due to generation of residue, properties were degraded, and in case additives were used to prevent generation of residues, due to these materials, the finally aimed properties were degraded.

In order to solve the problem, there is a demand for technology capable of preparing products having high moisture content without additional hydration equipment.

[Disclosure]

[Technical Problem]

Thus, it is an object of the invention to provide method for preparing super absorbent polymer that can easily control to a moisture content to an aimed range without generation of large quantities of fine particles, and simultaneously, realize excellent vortex time, by moving type drying of polymerized hydrogel polymer under specific conditions to prepare base resin powder having relatively high moisture content, and super absorbent polymer.

[Technical Solution]

In order to achieve the object, according to one embodiment of the invention, there is provided a method for preparing super absorbent polymer comprising steps of:

conducting crosslinking polymerization of water soluble ethylenically unsaturated monomers having acid groups in the presence of an internal crosslinking agent and a polymerization initiator to form hydrogel polymer (step 1);
micronizing the hydrogel polymer in the presence of a surfactant to prepare a mixture comprising micronized hydrogel polymer (step 2);
drying the mixture at 100 °C to 250 °C by moving type drying to form base resin powder having a moisture content of 10 wt% to 30 wt% (step 3);
thermally crosslinking the surface of the base resin powder in the presence of a surface crosslinking agent to prepare super absorbent polymer particles (step 4).

And, according to one embodiment of the invention, there is provided super absorbent polymer prepared according to the above-explained preparation method of super absorbent polymer.

[Effect of the Invention]

According to the preparation method of super absorbent polymer, by moving type drying at relatively low temperature in the step of drying hydrogel polymer, base resin having relatively high moisture content can be prepared, and thus, generation of fine particles can be inhibited during the process, and simultaneously, excellent vortex time can be realized.

[Detailed Description of the Embodiments]

The terms used herein are only to explain specific embodiments, and are not intended to limit the invention.

A singular expression includes a plural expression thereof, unless it is expressly stated or obvious from the context that such is not intended. As used herein, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

As used herein, terms "a first", "a second", "a third", and the like are used to explain various constructional elements, and they are used only to distinguish one constructional element from other constructional elements.

Although various modifications can be made to the invention and the invention may have various forms, specific examples will be illustrated and explained in detail below. However, it should be understood that these are not intended to limit the invention to specific disclosure, and that the invention includes all the modifications, equivalents or replacements thereof without departing from the spirit and technical scope of the invention.

**(Preparation method of super absorbent polymer)**

The preparation method of super absorbent polymer according to one embodiment of the invention comprises steps of: conducting crosslinking polymerization of water soluble ethylenically unsaturated monomers having acid groups in the presence of an internal crosslinking agent and a polymerization initiator to form hydrogel polymer (step 1); micronizing the hydrogel polymer in the presence of a surfactant to prepare a mixture comprising micronized hydrogel polymer (step 2); drying the mixture at 100 °C to 250 °C by moving type drying to form base resin powder having a moisture content of 10 wt% to 30 wt% (step 3); and thermally crosslinking the surface of the base resin powder in the presence of a surface crosslinking agent to prepare super absorbent polymer particles (step 4).

As used herein, the term "polymer" means a polymerized state of water soluble ethylenically unsaturated monomers, and it may include those of all moisture content ranges or particle diameter ranges.

And, the term "super absorbent polymer powder" refers to particulate matter comprising crosslinked polymer in which water soluble ethylenically unsaturated monomers comprising acid groups, at least a part of said acid groups being neutralized, are polymerized, and crosslinked by an internal crosslinking agent.

And, the term "super absorbent polymer" means crosslinked polymer polymerized from water soluble ethylenically unsaturated monomers comprising acid groups, at least a part of said acid groups being neutralized, or base resin consisting of super absorbent polymer particles formed by grinding of the crosslinked polymer, or is used to include the crosslinked polymer or base resin made appropriate for productization through additional processes, for example, surface crosslinking, fine particles reassembly, drying, grinding, classification, and the like.

And, the term "crosslinked polymer" means polymer formed by crosslinking polymerization of the water soluble ethylenically unsaturated monomers in the presence of an internal crosslinking agent, and the term "base resin powder" means material comprising such crosslinked polymer.

And, the term "fine particles" mean particles having particle diameter less than 150 $\mu$m among the super absorbent polymer particles. The particle diameter of such polymer particles may be measured according to European Disposables and Nonwovens Association(EDANA) standard EDANA WSP 220.3 method.

And, the term "chopping" means cutting hydrogel polymer to small pieces of millimeter unit so as to increase drying efficiency, and is distinguished from grinding, which reaches micrometer or normal particle level.

And, the term "micronizing(micronization)" means grinding hydrogel polymer to particle diameter of tens to hundreds of micrometers, and is distinguished from "chopping".

Such super absorbent polymer is generally prepared through the steps of polymerizing monomers to prepare hydrogel polymer containing a large quantity of moisture, and drying such hydrogel polymer and grinding it to resin particles having desired particle diameters. However, in case a grinding process is conducted after drying hydrogel polymer as described above, a large quantity of fine particles may be generated to deteriorate the properties of the finally prepared super absorbent polymer.

Thus, attempts to improve the moisture content of super absorbent polymer and decrease generation of fine particles have been made. In order to realize high moisture content, previously, additional hydration process equipment was installed in surface crosslinking equipment, and water was introduced therein, but since it was additional equipment, economical feasibility was low, and when water was used alone, due to generation of residue, properties were degraded, and in case additives were used to prevent generation of residues, due to these materials, the finally aimed properties were degraded.

Thus, the inventors found out that by moving type drying at relatively low temperature in the step of drying hydrogel polymer to prepare base resin powder having relatively high moisture content, generation of fine particles may be inhibited during the process, and simultaneously, excellent vortex time may be realized, and completed the invention.

Hereinafter, the preparation method will be explained in detail according to steps.

(Step 1: Polymerization step)

The preparation method of super absorbent polymer according to one embodiment of the invention comprises a step of conducting crosslinking polymerization of water soluble ethylenically unsaturated monomers having acid groups in the presence of an internal crosslinking agent and a polymerization initiator to form hydrogel polymer (step 1).

This step is a step wherein a monomer composition comprising an internal crosslinking agent, a polymerization initiator and a monomer mixture comprising water soluble ethylenically unsaturated monomers having acid groups is subjected to thermal polymerization or photo polymerization to form hydrogel polymer.

The water soluble ethylenically unsaturated monomers having acid groups may be any monomers commonly used in the preparation of super absorbent polymer. As non-limiting examples, the water soluble ethylenically unsaturated monomers may be a compound represented by the following Chemical Formula 2:

[Chemical Formula 2] $R_1$-$COOM^1$ $R_1$-$COOM^1$

In the Chemical Formula 2,

$R_1$ is a C2-5 alkyl group comprising unsaturated bond,

$M^1$ is a hydrogen atom, monovalent or divalent metal, an ammonium group or an organic amine salt.

Preferably, the monomer may be one or more selected from the group consisting of acrylic acid, methacrylic acid, and monovalent (alkali) metal salt, divalent metal salt, ammonium salt and organic amine salt of these acids. As such, in case acrylic acid and/or a salt thereof is used as water soluble ethylenically unsaturated monomers, super absorbent polymer with improved absorption property may be obtained. Besides, as the monomers, one or more selected from the group consisting of anionic monomers and salts thereof such as maleic anhydride, fumaric acid, crotonic acid, itaconic acid, 2-acryloylethane sulfonic acid, 2-methacryloylethane sulfonic acid, 2-methacryloylpropane sulfonic acid, or 2-methacrylamide-2-methylpropane sulfonic acid; non-ionic hydrophilic group-containing monomers such as methacrylamide, N-substituted(meth)acrylate, 2-hydroxyethyl methacrylate, 2-hydroxypropyl methacrylate, methoxy polyethylene glycol methacrylate, polyethylene glycol methacrylate; and amino group containing unsaturated monomers and quarternarized products thereof, such as (N,N)-dimethylaminoethyl methacrylate, (N,N)-dimethylaminopropyl methacrylamide, and the like, may be used.

According to one embodiment of the invention, in case water soluble ethylenically unsaturated monomers having non-neutralized acid groups are used, polymerized polymer has acid groups, and thus, a neutralization step may

be included after the polymerization step.

Namely, the step of forming hydrogel polymer (step 1) may comprise steps of: conducting crosslinking polymerization of water soluble ethylenically unsaturated monomers having acid groups in the presence of an internal crosslinking agent and a polymerization initiator to form polymer (step 1-1); and neutralizing at least a part of the acid groups of the polymer to form hydrogel polymer (step 1-2).

The water soluble ethylenically unsaturated monomers(for example, acrylic acid), of which acid groups are not neutralized, are liquid and have high miscibility with a solvent(water), and thus, exist in the state of a mixed solution in the monomer composition. However, water soluble ethylenically unsaturated monomers, of which acid groups are neutralized, are solid at room temperature, and have different solubilities according to the temperature of a solvent(water), and the solubility is lower as the temperature is lower.

As such, the water soluble ethylenically unsaturated monomers(for example, acrylic acid), of which acid groups are not neutralized, have higher solubility to or miscibility with a solvent(water) than the monomers of which acid groups are neutralized, and are not precipitated even at low temperature, and thus, are favorable for polymerization for a long time at low temperature. Thus, by conducting polymerization for a long time using the water soluble ethylenically unsaturated monomers(for example, acrylic acid), of which acid groups are not neutralized, polymer having higher molecular weight and uniform molecular weight distribution may be stably formed.

And, polymer of longer chain can be formed, thus achieving the effect for reducing extractable contents that exist in non-crosslinked state due to incomplete polymerization or crosslinking.

And, as such, if polymerization is first conducted while the acid groups of the monomers are not neutralized, to form polymer, and the polymer is micronized in the presence of a surfactant after neutralization, or the acid groups existing in the polymer are neutralized simultaneously with micronization, the surfactant may exist on the surface of the polymer in large quantities, and sufficiently perform a function for lowering adhesion of polymer.

The concentration of the water soluble ethylenically unsaturated monomers in the monomer composition comprising an internal crosslinking agent, a polymerization initiator and water soluble ethylenically unsaturated monomers may be appropriately controlled considering polymerization time and reaction conditions, and the like, and it may be controlled to about 20 to about 60 wt%, or about 20 to about 40 wt%.

According to another embodiment of the invention, before the polymerization step, a step of neutralizing at least a part of the acid groups of water soluble ethylenically unsaturated monomers having acid groups may be included.

Namely, the step of forming hydrogel polymer (step 1) may comprise steps of: neutralizing at least a part of the acid groups of water soluble ethylenically unsaturated monomers having acid groups (step 1-1'); and conducting crosslinking polymerization of the water soluble ethylenically unsaturated monomers having acid groups, of which at least a part are neutralized, in the presence of an internal crosslinking agent and a polymerization initiator, to form hydrogel polymer (step 1-2').

The neutralization step of the acid groups may be progressed by mixing with a neutralization agent capable of neutralizing acid groups, and as examples of the neutralization agent, basic material such as sodium hydroxide, potassium hydroxide, ammonium hydroxide, and the like may be used.

Wherein, the degree of neutralization may be 40 to 95 mol%, or 40 to 90 mol%, or 45 to 80 mol%. Although the range of the neutralization degree may vary according to the final properties, if the neutralization degree is too high, a surface crosslinking reaction may not sufficiently occur, and thus, absorbency under pressure(AUP) may decrease, and to the contrary, if the neutralization degree is too low, absorption property of polymer may be significantly lowered, and rubber like property may be exhibited, which is difficult to handle.

Meanwhile, according to one embodiment of the invention, in case the step of forming hydrogel polymer(step 1) is conducted by polymerization(step 1-1) followed by neutralization(step 1-2), the neutralization step may be sequentially, simultaneously or alternately conducted with the micronizing step of hydrogel polymer described later.

Namely, a neutralization agent may be sprayed to polymer to first neutralize the acid groups of the polymer, and then, a surfactant may be introduced to the neutralized polymer to micronize a mixture of the polymer and surfactant; or a mixture of polymer and a surfactant may be micronized, and then, a neutralization agent may be introduced to neutralize; or a neutralization agent and a surfactant may be simultaneously introduced in polymer to conduct neutralization and micronization of polymer.

Meanwhile, in order to uniformly neutralize the whole polymer, it may be preferable that a certain time difference is set between the introduction of a neutralization agent and the micronizing process.

Hydrogel polymer obtained by such a method may have a moisture content of 40 wt% to 80 wt%. Preferably, it may be 45 wt% or more, 50 wt% or more, and 75 wt% or less, or 70 wt% or less. If the moisture content of hydrogel polymer is too low, it may be difficult to secure appropriate surface area in the subsequent micronizing step, and thus, the hydrogel polymer may not be effectively micronized, and if the moisture content of hydrogel polymer too high, pressure in the subsequent micronizing step may increase, and thus, it may be difficult to grind to a desired particle size.

Meanwhile, throughout the specification, a "moisture content" is the content of moisture occupied, based on the total polymer weight, and it means a value obtained by subtracting the weight of dried polymer from the weight of

polymer. Specifically, it is calculated by measuring weight decrease according to evaporation of moisture in the polymer while increasing the temperature of polymer in the state of crumb to dry through infrared heating. Wherein, a temperature is increased from a room temperature to about 180°C, and then, maintained at 180 °C, and the total drying time is set to 40 minutes including 5 minutes of the temperature rise step.

As used herein the term 'internal crosslinking agent' is used to distinguish from a surface crosslinking agent for crosslinking the surface of super absorbent polymer particles described later, and it functions for introducing crosslinks between unsaturated bonds of the above explained water soluble ethylenically unsaturated monomers, to form polymer comprising a crosslink structure.

In this step, crosslinking is progressed without distinction of a surface and inside, but in case a surface crosslinking process of super absorbent polymer is progressed as described later, the surface of the finally prepared super absorbent polymer particles may comprise a structure newly crosslinked by the surface crosslinking agent, and the inside of the super absorbent polymer particles may maintain the structure crosslinked by the internal crosslinking agent.

As the internal crosslinking agent, one or more kinds of i) multifunctional acrylate-based compounds, ii) multifunctional allyl-based compounds, or iii) multifunctional vinyl-based compounds may be used.

As non-limiting examples of the multifunctional acrylate-based compounds, ethyleneglycol dimethacrylate, diethyleneglycol dimethacrylate, triethyleneglycol dimethacrylate, tetraethyleneglycol dimethacrylate, polyethyleneglycol dimethacrylate, propyleneglycol dimethacrylate, tripropyleneglycol dimethacrylate, polypropyleneglycol dimethacrylate, butanediol dimethacrylate, butyleneglycol dimethacrylate, hexanediol dimethacrylate, pentaerythritol dimethacrylate, pentaerythritol tri(meth)acrylate, pentaerythritol tetramethacrylate, dipentaerythritol dimethacrylate, dipentaerythritol trimethacrylate, dipentaerythritol tetra(meth)acrylate, dipentaerythritol pentamethacrylate, trimethylolpropane dimethacrylate, trimethylolpropane trimethacrylate, glycerin dimethacrylate, and glycerin trimethacrylate, and the like may be mentioned, and one of them or two or more kinds of them may be mixed and used.

As non-limiting examples of the multifunctional allyl-based compounds, ethyleneglycol diallyl ether, diethyleneglycol diallyl ether, triethyleneglycol diallyl ether, tetraethyleneglycol diallyl ether, polyethyleneglycol diallyl ether, propyleneglycol diallyl ether, tripropyleneglycol diallyl ether, polypropyleneglycol diallyl ether, butanediol diallyl ether, butyleneglycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, and glycerin triallyl ether, and the like may be mentioned, and one of them or two or more kinds of them may be mixed and used.

As non-limiting examples of the multifunctional vinyl-based compounds, ethyleneglycol divinyl ether, diethyleneglycol divinyl ether, triethyleneglycol divinyl ether, tetraethyleneglycol divinyl ether, polyethyleneglycol divinyl ether, propyleneglycol divinyl ether, tripropyleneglycol divinyl ether, polypropyleneglycol divinyl ether, butanediol divinyl ether, butyleneglycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentainyl ether, trimethylolpropane divinyl ether, trimethylolpropane trivinyl ether, glycerin divinyl ether, and glycerin trivinyl ether, and the like may be mentioned, and one of them or two or more kinds of them may be mixed and used. Preferably, pentaerythritol triallyl ether may be used.

In the above-explained multifunctional acrylate-based compounds, two more acrylate groups included in the molecule may respectively bind to the unsaturated bonds of water soluble ethylenically unsaturated monomers, or unsaturated bonds of other internal crosslinking agent, thus forming a crosslink structure during the polymerization process.

In the above explained multifunctional allyl-based compounds, or multifunctional vinyl-based compounds, two or more unsaturated groups included in the molecule respectively bind to the unsaturated bonds of water soluble ethylenically unsaturated monomers, or unsaturated bonds of other internal crosslinking agents, thus forming a crosslink structure during the polymerization process, and unlike acrylate-based compounds comprising an ester bond(-(C=O)O-) in the molecule, the crosslink may be more stably maintained during the neutralization process after the polymerization reaction.

Thus, gel strength of prepared super absorbent polymer may increase, and process stability during a discharge process after polymerization may increase.

The internal crosslinking agent may be used in an amount of 0.01 to 5 parts by weight, based on 100 parts by weight of the water soluble ethylenically unsaturated monomers. For example, the internal crosslinking agent may be used in an amount of 0.01 parts by weight or more, or 0.05 parts by weight or more, or 0.1 parts by weight or more, or 0.45 parts by weight or more, and 5 parts by weight or less, or 3 parts by weight or less, or 2 parts by weight or less, or 1 part by weight or less, or 0.7 parts by weight or less, based on 100 parts by weight of the water soluble ethylenically unsaturated monomers. If the content of the internal crosslinking agent is too low, crosslinking may not sufficiently occur, and thus, it may be difficult to realize strength above an optimum level, and if the content of the internal crosslinking agent is too high, the internal crosslinking density may increase, and thus, it may be difficult to realize desired centrifuge retention capacity.

The polymer formed using such an internal crosslinking agent has a three-dimensional network structure in which main chains formed by polymerization of the water soluble ethylenically unsaturated monomers are crosslinked by the internal crosslinking agent. As such, in case polymer has a three-dimensional network structure, compared to a two-dimensional linear structure that is not additionally crosslinked by an internal crosslinking agent, the properties of super absorbent polymer such as centrifuge retention capacity and absorbency under pressure may be remarkably improved.

And, the monomer composition may comprise a polymerization initiator commonly used in the preparation of super absorbent polymer. As non-limiting examples, as the polymerization initiators, thermal polymerization initiators or photo polymerization initiators, and the like may be used according to polymerization method. However, even in the case of photo polymerization, since a certain amount of heat is generated by UV irradiation, and the like, and heat is generated to some degree according to the progression of the exothermic polymerization reaction, a thermal polymerization initiator may be additionally included.

As the photo polymerization initiators, for example, one or more compounds selected from the group consisting of benzoin ether, dialkyl acetophenone, hydroxyl alkylketone, phenyl glyoxylate, benzyl dimethyl ketal, acyl phosphine and $\alpha$-aminoketone may be used. Among them, as specific examples of the acyl phosphine, diphenyl(2,4,6-trimethylbenzoyl)phosphine oxide, phenylbis(2,4,6-trimethylbenzoyl)phosphine oxide, ethyl(2,4,6-trimethylbenzoyl)phenyl phosphine oxide, and the like may be mentioned. More various photo initiators are stated in Reinhold Schwalm, "UV Coatings: Basics, Recent Developments and New Application(Elsevier 2007)" p115, and are not limited to the above examples.

As the thermal polymerization initiator, one or more selected from the group consisting of persulfate-based initiators, azo-based initiators, hydrogen peroxide and ascorbic acid may be used. Specifically, as the examples of the persulfate-based initiators, sodium persulfate($Na_2S_2O_8$), potassium persulfate($K_2S_2O_8$), ammonium persulfate($(NH_4)_2S_2O_8$), and the like, may be mentioned, and as the examples of the azo-based initiators, 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), and the like may be mentioned. More various thermal polymerization initiators are stated in Odian, 'Principle of polymerization(Wiley, 1981)', p203, and may be referred to. For reference, as described later, in case the polymerization step is conducted in a batch type reactor, a thermal polymerization method is used, and thus, the above-explained thermal polymerization initiators may be used as the polymerization initiator.

Such a polymerization initiator may be used in an amount of 0.001 parts by weight to 1 part by weight, based on 100 parts by weight of the water soluble ethylenically unsaturated monomers. Namely, if the concentration of the polymerization initiator is too low, polymerization speed may become slow, and remaining monomers may be extracted in large quantities in the final product. To the contrary, if the concentration of the polymerization initiator is too high, polymer chains making up a network may become short, and thus, extractable contents may increase, and absorbency under pressure may decrease, thus deteriorating properties of polymer.

Meanwhile, according to one embodiment of the invention, polymerization may be initiated by introducing the initiator together with a reducing agent forming a redox couple with the initiator.

Specifically, the initiator and reducing agent, when introduced in a polymerization solution, react with each other to form radicals.

The radicals formed react with monomers, and since the oxidation-reduction reaction between the initiator and reducing agent is highly reactive, even if small amounts of initiator and reducing agent are introduced, polymerization may be initiated, thus enabling low temperature polymerization without need to increase process temperature, and minimizing property change of the polymer solution.

The polymerization using an oxidation-reduction reaction may smoothly occur at a temperature around a room temperature(25°C) or lower temperature. For example, the polymerization reaction may be conducted at a temperature of 5 °C or more and 25 °C or less, or 5 °C or more and 20 °C or less.

In one embodiment of the invention, in case a persulfate-based initiator is used as the initiator, as the reducing agent, one or more selected from the group consisting of sodium metabisulfite($Na_2S_2O_5$); tetramethyl ethylenediamine(TMEDA); a mixture of iron sulfate(II) and EDTAFe$SO_4$/EDTA); sodium formaldehyde sulfoxylate; and disodium 2-hydroxy-2-sulfinoacetate may be used.

For example, potassium persulfate may be used as the initiator, and disodium 2-hydroxy-2-sulfinoacetate may be used as the reducing agent; ammonium persulfate may be used as the initiator, and tetramethyl ethylenediamine may be used as the reducing agent; or sodium persulfate may be used as the initiator, and sodium formaldehyde sulfoxylate may be used as the reducing agent.

In another embodiment of the invention, in case a hydrogen peroxide-based initiator is used as the initiator, the reducing agent may be one or more selected from the group consisting of ascorbic acid; sucrose; sodium sulfite($Na_2SO_3$); sodium metabisulfite($Na_2S_2O_5$); tetramethyl ethylenediamine(TMEDA); a mixture of iron sulfate(II) and EDTA($FeSO_4$/EDTA); sodium formaldehyde sulfoxylate; disodium 2-hydroxy-2-sulfinoacetate; and disodium 2-hydroxy-2-sulfoacetate.

Besides, the monomer composition may further comprise additives such as a thickener, a plasticizer, a preservative, an antioxidant, and the like, as necessary.

And, the monomer composition may be prepared in the form of a solution in which raw materials such as the above explained water soluble ethylenically unsaturated monomers, polymerization initiator, internal crosslinking agent, and the like are dissolved in a solvent.

Wherein, a solvent that can be used is not limited as long as it can dissolve the above explained raw materials, and for example, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methyl celosolve acetate and N,N-dimethylacetamide or mixtures thereof may be used.

According to one embodiment of the invention, the step of conducting polymerization of the monomer composition to form polymer may be conducted in a batch type reactor.

In the common preparation method of super absorbent polymer, the polymerization method is largely divided into thermal polymerization and photopolymerization according to polymerization energy source, and commonly, thermal polymerization may be progressed in a reactor equipped with a stirring axis such as a kneader, and photopolymerization may be progressed in a reactor equipped with a movable conveyor belt or in a flat-bottom container.

Meanwhile, by such a polymerization method, generally, polymer having modest molecular weight and wide molecular weight distribution is formed according to short polymerization reaction time (for example, 1 hour or less). Meanwhile, in case photopolymerization is progressed in a reactor equipped with a movable conveyor belt or in a flat bottom container, hydrogel polymer sheet having a width of the belt is commonly obtained, and the thickness of the polymer sheet may vary according to the concentration of introduced monomer composition and introduction speed or introduction amount, but commonly, it may be about 0.5 to about 5cm.

However, in case the monomer composition is supplied such that the thickness of the polymer sheet becomes too thin, production efficiency may be low, and in case the thickness of polymer sheet is increased for productivity, a polymerization reaction may not uniformly occur over the whole thickness, and thus, it may be difficult to form high quality polymer.

And, since polymerization in the reactor equipped with a stirring axis and conveyor belt is continuously progressed while polymerization product moves and new monomer composition is fed to the reactor, polymers having different polymerization rates may be mixed, and thus, polymerization may not uniformly occur over the whole monomer composition, thus causing property deterioration.

However, as explained above, according to one embodiment of the invention, by progressing fixed-bed type polymerization in a batch type reactor, there is little concern about mixing of polymers having different polymerization rates, and thus, polymer having uniform quality may be obtained.

And, the polymerization step is conducted in a batch type reactor having a predetermined volume, and a polymerization reaction is conducted for a longer time than the case of conducting continuous polymerization in a reactor equipped with a conveyor belt, for example, for 3 hours or more. Despite the long polymerization reaction time, by controlling the capacity of a batch type reactor, larger amount of monomers can be contained than in a reactor equipped with a conveyor belt, thus maintaining overall productivity.

Meanwhile, the polymerization in a batch type reactor uses a thermal polymerization method, and thus, uses a thermal polymerization initiator as the polymerization initiator.

(Step 2: Micronization step)

Next, the preparation method of super absorbent polymer according to one embodiment of the invention comprises a step of micronizing the hydrogel polymer in the presence of a surfactant to prepare a mixture comprising micronized hydrogel polymer (step 2).

The micronization step is a step of micronizing the polymer in the presence of a surfactant, wherein the polymer is not chopped to millimeter size, but finely cut to tens to hundreds of micrometers and simultaneously aggregated. Namely, by giving appropriate adhesion to polymer, secondary aggregated particles formed by aggregation of primary particles finely cut to tens to hundreds of micrometer size are prepared. The secondary aggregated particles prepared by such a step, i.e., hydrated super absorbent polymer particles, have normal particle size distribution, but have significantly increased surface area, and thus, have remarkably improved vortex time.

According to one embodiment of the invention, the surfactant may be one or more selected from the group consisting of compounds represented by the Chemical Formula 1 and salts thereof, but not limited thereto.

[Chemical Formula 1]

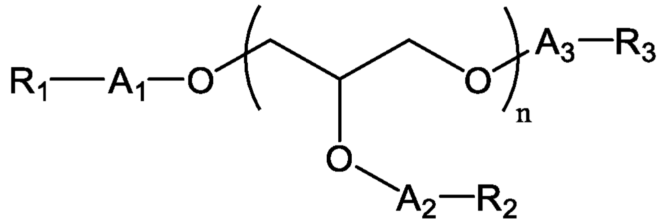

In the Chemical Formula 1,

$A_1$, $A_2$ and $A_3$ are each independently, a single bond, carbonyl,

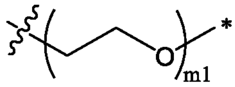,

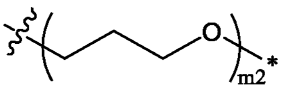 or 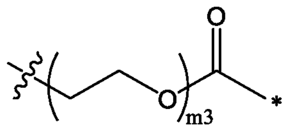,

provided that one or more of them are carbonyl or

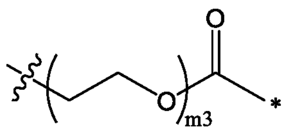,

wherein m1, m2 and m3 are each independently, n integer of 1 to 8, each

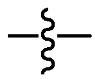

is connected to adjacent oxygen atom, and each

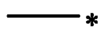

is connected to adjacent $R_1$, $R_2$ and $R_3$,
$R_1$, $R_2$ and $R_3$ are each independently, hydrogen, C6-18 linear or branched alkyl or C6-18 linear or branched alkenyl, and
n is an integer of 1 to 9.

The surfactant is mixed with polymer and added such that the micronization step may be easily conducted without aggregation.

The surfactant represented by the Chemical Formula 1 is a non-ionic surfactant, and has excellent surface adsorption capability even with non-neutralized polymer by hydrogen bonding force, and thus, is suitable for realization of aimed aggregation control effect. To the contrary, in the case of anionic surfactant, if it is mixed with polymer neutralized with a neutralization agent such as NaOH, $Na_2SO_4$, and the like, it may be adsorbed by Na+ ions to the carboxylic group substituent of polymer, and if it is mixed with non-neutralized polymer, due to competition of the carboxylic group substituent of polymer with anion, adsorption efficiency to polymer may be relatively degraded.

Specifically, in the surfactant represented by the Chemical Formula 1, hydrophobic functional groups are end

functional groups $R_1$, $R_2$, $R_3$ (if not hydrogen), and hydrophilic functional groups include a part derived from glycerol in the chain, and hydroxyl groups at the end(in case $A_n$ is a single bond, and simultaneously, $R_n$ is hydrogen, n=1~3), wherein the glycerol-derived part and the end hydroxyl groups are hydrophilic functional groups and perform a function for improving adsorption capability to polymer surface. Thus, aggregation of super absorbent polymer particles may be effectively inhibited.

In the Chemical Formula 1, hydrophobic functional groups $R_1$, $R_2$, $R_3$(if not hydrogen) are each independently, C6-18 linear or branched alkyl or C6-18 linear or branched alkenyl. Wherein, in case $R_1$, $R_2$, $R_3$(not hydrogen) are alkyl or alkenyl having a carbon number less than 6, due to short chain length, aggregation of ground particles may not be effectively controlled, and in case $R_1$, $R_2$, $R_3$(not hydrogen) are alkyl or alkenyl having a carbon number greater than 18, mobility of the surfactant may decrease, and thus, it may not be effectively mixed with polymer, and due to increase in surfactant cost, the unit cost of a composition may increase.

Preferably, $R_1$, $R_2$, $R_3$ may be hydrogen, or in case it is C6-18 linear or branched alkyl, it may be 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or in case it is C6-18 linear or branched alkenyl, it may be 2-hexenyl, 2-heptenyl, 2-octenyl, 2-nonenyl, 2-decenyl, 2-undecenyl, 2-dodecenyl, 2-tridecenyl, 2-tetradecenyl, 2-pentadecenyl, 2-hexadecenyl, 2-heptadecenyl, or 2-octadecenyl.

The surfactant may be selected from compounds represented by the following Chemical Formula 1-1 to Chemical Formula 1-14:

[Chemical Formula 1-1]

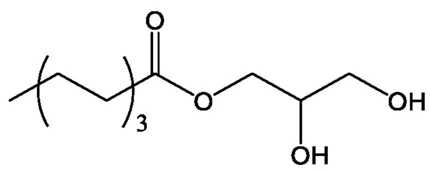

[Chemical Formula 1-2]

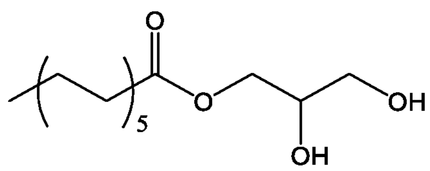

[Chemical Formula 1-3]

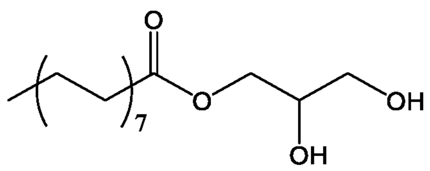

[Chemical Formula 1-4]

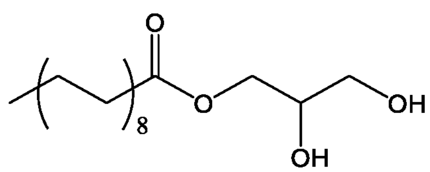

[Chemical Formula 1-5]

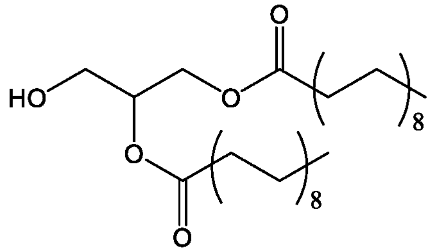

[Chemical Formula 1-6]

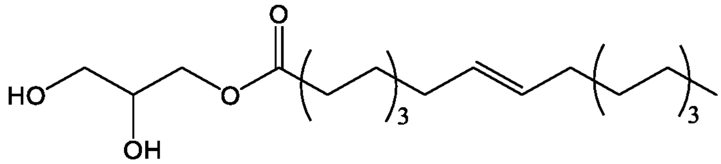

[Chemical Formula 1-7]

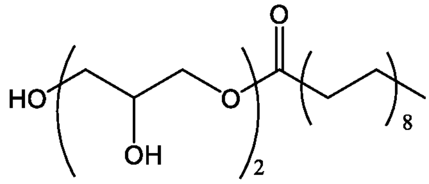

[Chemical Formula 1-8]

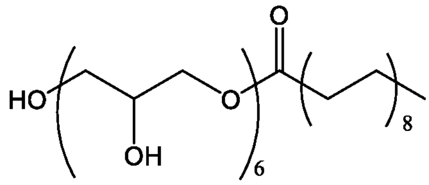

[Chemical Formula 1-9]

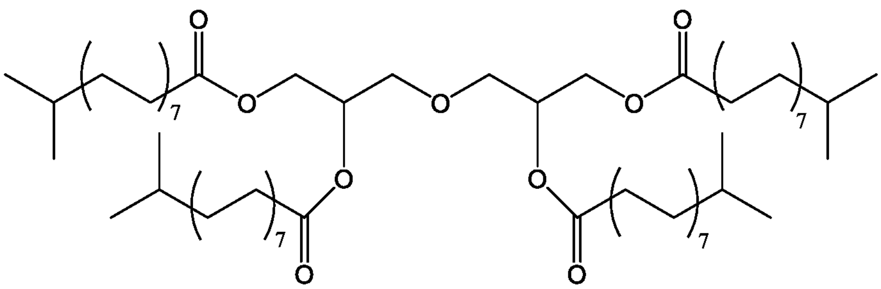

[Chemical Formula 1-10]

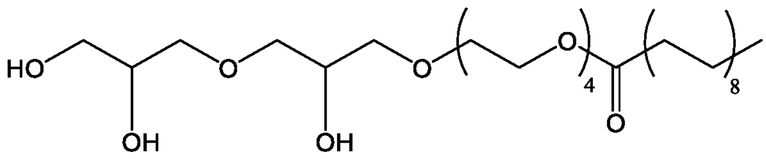

[Chemical Formula 1-11]

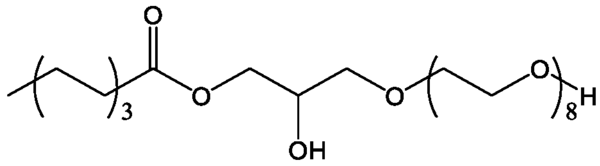

[Chemical Formula 1-12]

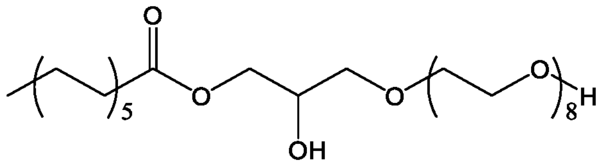

[Chemical Formula 1-13]

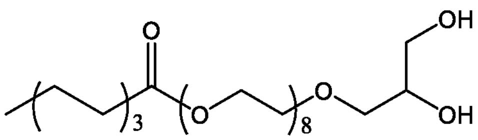

[Chemical Formula 1-14]

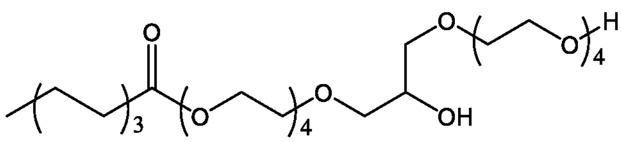

Meanwhile, the surfactant may be used in an amount of 0.01 to 10 parts by weight, based on 100 parts by weight of the polymer. If the amount of the surfactant used is too small, it may not be uniformly adsorbed on polymer surface, and thus, reaggregation of particles may be generated after grinding, and if the amount of the surfactant used is too large, the properties of the finally prepared super absorbent polymer may be deteriorated. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight or less, based on 100 parts by weight of the polymer.

A method for mixing such a surfactant with polymer is not specifically limited, as long as it can uniformly mix them. Specifically, the surfactant may be dry mixed, or it may be dissolved in a solvent and then mixed in a solution state, or it may be molten and then mixed.

For example, the surfactant may be mixed in the state of a solution dissolved in a solvent. Wherein, as the solvent, inorganic solvents or organic solvents may be used without limitations, but considering easiness of a drying process and cost of solvent recovery system, water is most appropriate. And, the surfactant and polymer may be put in a reactor and mixed, or polymer may be put in a mixer and the solution may be sprayed, or polymer and the solution may be continuously supplied to a continuously operated mixer and mixed, and the like.

Meanwhile, according to one embodiment of the invention, the step of neutralizing at least a part of the acid

groups of the polymer (step 2), and the step of micronizing the polymer in the presence of a surfactant, to prepare hydrated super absorbent polymer particles (step 3) may be sequentially or simultaneously conducted.

Namely, a neutralization agent may be introduced in polymer to neutralize the acid groups, and then, a surfactant may be introduced in the neutralized polymer and the polymer mixed with the surfactant may be micronized; or a neutralization agent and a surfactant may be simultaneously introduced in polymer to conduct neutralization and micronization of polymer. Alternatively, a surfactant may be introduced first, and a neutralization agent may be introduced later. Alternatively, a neutralization agent and a surfactant may be alternately introduced. Alternatively, a surfactant may be introduced first for micronization, and then, a neutralization agent may be introduced for neutralization, and a surfactant may be additionally introduced in the neutralized hydrogel polymer to additionally conduct a micronization process.

Meanwhile, for uniform neutralization over the whole polymer, it may be preferable to set a regular time difference between the introduction of the neutralization agent and the micronization process.

At least a part or significant amount of the surfactant may exist on the surfaces of the hydrated super absorbent polymer particles.

Wherein, the description "the surfactant exists on the surfaces of hydrated super absorbent polymer particles" means that at least a part or significant amount of the surfactant is adsorbed or bonded to the surfaces of the hydrated super absorbent polymer particles. Specifically, the surfactant may be physically or chemically adsorbed to the surface of the super absorbent polymer. More specifically, the hydrophilic functional groups of the surfactant may be physically adsorbed to the hydrophilic parts of the super absorbent polymer surface by intermolecular force such as dipole-dipole interaction. As such, the hydrophilic parts of the surfactant are physically adsorbed to the surface of the super absorbent polymer particles to cover the surface, and the hydrophobic parts of the surfactant are not adsorbed to the surface of polymer particles, and thus, polymer particles may be coated with the surfactant in the form of a micelle structure. This is because the surfactant is not introduced during the polymerization process of the water soluble ethylenically unsaturated monomers, but introduced in the micronization step after formation of polymer, and compared to the case wherein the surfactant is introduced during the polymerization process and exists inside the polymer, a function as a surfactant may be fully performed, and since grinding and aggregation simultaneously occur, particles having large surface area may be obtained in the form of aggregated fine particles.

Meanwhile, according to one embodiment of the invention, the step of micronizing hydrogel polymer (step 2) may be conducted by pushing the hydrogel polymer through a perforated plate equipped with plural of holes.

Specifically, the micronization step may be conducted using a micronizing apparatus equipped with a perforated plate having plural of holes, in such a way that hydrogel polymer mixed with a surfactant is pushed through the perforated plate.

Preferably, the micronizing apparatus may comprise: a body part comprising a transfer space where hydrogel polymer is transferred inside; a screw member that is rotatably installed inside the transfer space to move polymer; a driving motor providing rotation force to the screw member; a cutter member that is installed in the body part to grind the hydrogel polymer; and a perforated plate discharging the hydrogel polymer ground by the cutter member outside the body part, in which plural of holes are formed.

Preferably, the cutter member comprises a perforated plate and a cutting knife adjacent to the perforated plate and arranged at the outlet of the body part, and the mixture may pass through the perforated plate (310), and then, be ground by the cutting knife and micronized.

The cutter member may comprise plural of perforated plates and plural of cutting knifes.

The size of holes formed in the perforated plate (310) may be 0.1 mm to 30 mm, preferably, 0.5 mm to 25 mm, 1mm to 20 mm, 1 mm to 10 mm. By using the perforated plate having such a hole size, hydrogel polymer particles having particle diameter of aimed degree can be prepared. Meanwhile, in case the number of the cutter member is plural, the size of hole formed in the perforated plate of each cutter member may respectively meet the above explained range.

Meanwhile, according to one embodiment of the invention, the step of micronizing the hydrogel polymer (step 2) may be conducted multiple times, preferably 1 to 6 times, or 1 to 4 times.

The multiple times of micronizing may be conducted using a single micronizing apparatus comprising plural of cutter members, or using plural of micronizing apparatuses, or using plural of micronizing apparatuses, one or more of them comprising plural of cutter members. The size of hole of each perforated plate used in the multiple micronizing may be identical to or different from each other.

Preferably, in case the micronizing step is conducted two times, the first micronizing step and the second micronizing step may be conducted such that first micronized hydrogel polymer particles may be second micronized to a smaller average particle diameter.

Meanwhile, according to one embodiment of the invention, in the above explained polymerization step, in case polymerization is first conducted while acid groups of monomers are not neutralized, to form non-hydrogel polymer, and it is neutralized to form hydrogel polymer, in the micronizing step, a surfactant may exist on the surface of polymer in large quantities, thus lowering adhesion of the polymer, thereby effectively controlling aggregation of hydrogel polymer. And, if polymerization is conducted while the acid groups of monomers are not neutralized, polymer of longer chain can

be formed, thus achieving the effect for reducing extractable contents existing in non-crosslinked state due to incomplete polymerization or crosslinking.

In this case, a neutralization agent may be sprayed to polymer comprising non-neutralized acid groups, to first neutralize the acid groups of polymer, and then, a surfactant may be introduced in the neutralized polymer, to micronize the mixture with the surfactant; or a mixture of polymer and a surfactant may be micronized, and then, a neutralization agent may be introduced to neutralize; or a neutralization agent and a surfactant may be simultaneously introduced in polymer, to conduct neutralization and micronization of polymer.

(Step 3: Moving type drying step)

Next, the preparation method of super absorbent polymer according to one embodiment of the invention comprises a step of drying the mixture comprising micronized hydrogel polymer at 100 °C to 250 °C by moving type drying to form base resin powder having a moisture content of 10 wt% to 30 wt% (step 3).

In the common preparation method of super absorbent polymer, it is in general that the drying step is conducted until the moisture content of super absorbent polymer particles become less than 10 wt%. However, according to the invention, by conducting a micronizing step in the presence of a surfactant, aggregation of micronized hydrogel polymer is controlled, and thus, drying is conducted such that the moisture content of dried super absorbent polymer particles becomes 10 wt% to 30 wt%. According to the invention, by conducting the micronizing step in the presence of a surfactant, even if base resin powder is dried such that it may have relatively high moisture content in the above explained range, aggregation between base resin powders may be minimized, and thus, generation of fine particles in the subsequent process may be fundamentally prevented, and vortex time of the finally prepared super absorbent polymer may be improved.

In case the moisture content of the base resin powder is less than 10 wt%, it may be difficult to effectively control generation of fine particles, and a hydration process may be necessarily required in the subsequent surface crosslinking process, and the like, so as to increase the moisture content of the finally prepared super absorbent polymer. And, if the moisture content is greater than 30 wt%, there is a concern about generation of some aggregation, and thus, additional grinding process may be required.

The drying step is conducted by moving type drying at relatively low temperature of 100 °C to 250 °C. Such moving type drying is distinguished from fixed-bed type drying according to whether material moves or not during drying, and is preferable in that aggregation of micronized hydrogel polymer particles is prevented, and drying is completed in a short time.

Specifically, the moving type drying refers to a method of drying while mechanically stirring a dried body. Wherein, a direction where hot air passes through material may be identical to or different from the circulation direction of the material. Alternatively, material may be circulated inside a dryer, and heat transfer fluid may be passed through a separate pipe outside the dryer to dry the material. On the other hand, fixed-bed type drying refers to a method of drying wherein hot air passes through material from the top to the bottom, while material to be dried is stopped on a bottom such as a perforated steel plate through which air can pass.

If the drying temperature of the moving type drying step is less than 100 °C, drying time may become excessively lengthened, particle size may increase due to undried polymer, and grinding and classification may be impracticable, and if the drying temperature is greater than 250 °C, only the surface of polymer may be dried, and thus, it may be difficult to realize a moisture content of aimed degree, and in case the drying time is decreased so as to realize aimed moisture content, the inside may not be smoothly dried. The drying temperature may be preferably 100 °C to 150 °C, 100 °C to 140 °C, 100 °C to 130 °C or 110 °C to 130 °C. Within the above range of temperature, the moisture content of the final super absorbent polymer may be controlled within aimed range without the above explained problems, and the vortex time of the finally prepared super absorbent polymer may be improved.

Meanwhile, the drying temperature may be internal operation temperature of a moving type dryer at which material to be dried is introduced, and it may be controlled by passing heat transfer medium (heat transfer oil) through a separate pipe outside the dryer, but not limited thereto.

Meanwhile, the step of moving type drying (step 3) may be conducted by introducing the mixture in a moving type dryer rotating at a speed of 30 rpm to 300 rpm. For example, it may be conducted by introducing a mixture comprising micronized hydrogel polymer in a moving type dryer rotating at the above speed range, and passing heat transfer medium (heat transfer oil) through a separate pipe outside the dryer, thus drying the mixture at the above described temperature range.

If the rotation speed is less than 30 rpm, drying time may become excessively lengthened, and smooth movement may not be generated, and thus, it may be difficult to uniformly dry, and if the rotation speed is greater than 300 rpm, due to increase in friction between polymer and inside of the dryer, particles may be crushed. Preferably, the rotation speed may be 50 rpm to 250rpm, 55 rpm to 200rpm or 60 rpm to 100rpm. Within the above range of rotation speed, the moisture content of the final super absorbent polymer may be controlled to aimed range without above explained problems, and the vortex time of the finally prepared super absorbent polymer may be improved.

In the step of moving type drying (step 3), commonly used moving type dryers may be used without specific limitations, and for example, a horizontal-type mixer, a rotary kiln, a paddle dryer or a steam tube dryer may be used.

Meanwhile, the moving type drying step (step 3) may be conducted for 30 minutes to 120 minutes, and since aggregation between micronized hydrogel polymer particles in the ground product to be dried is small, the drying step is conducted at relatively low temperature for a short time.

The drying step may be preferably conducted for 30 minutes to 90 minutes or 40 minutes to 60 minutes, and even if the drying process is conducted under the above explained low temperature conditions for such a short time, super absorbent polymer having high moisture content and excellent vortex time may be prepared without problem of non-uniform moisture content between particles.

According to one embodiment of the invention, the average particle diameter of base resin powder prepared through the moving type drying process under the above explained conditions may be 50 $\mu$m to 600 $\mu$m, preferably 100 $\mu$m to 500 $\mu$m,2 00 $\mu$m to 500 $\mu$m, 150 $\mu$m to 450 $\mu$m, or 200 $\mu$m to 400 $\mu$m. By meeting the above particle diameter range, polymer may be prepared as secondary particles in the form of aggregated primary particles, and thus, the subsequent grinding and drying processes may be progressed under milder conditions, thus remarkably reducing the amount of fine particles generated during the process.

As used herein, average particle diameter "Dn" means particle size or particle diameter at n% point in particle number cumulative distribution. Namely, D50 indicates a particle size at 50% point in particle number cumulative distribution according to particle size, D90 indicates a particle size at 90% point in particle number cumulative distribution according to particle size, and D10 indicates a particle size at 10% point in particle number cumulative distribution according to particle size. The Dn may be measured using laser diffraction method, and the like. Specifically, powders to be measured are dispersed in a dispersion medium, and then, introduced in commercially available laser diffraction particle size measuring device (for example, Microtrac S3500), and when the particles pass through laser beam, difference in diffraction pattern according to particle size is measured, thus calculating particle size distribution. By calculating particle sizes at 10%, 50% and 90% points in particle number cumulative distribution according to particle size in the measuring device, D10, D50 and D90 may be measured.

(Step 4: Surface crosslinking step)

Next, the preparation method of super absorbent polymer according to one embodiment of the invention comprises a step of thermally crosslinking the surface of the base resin powder in the presence of a surface crosslinking agent to prepare super absorbent polymer particles (step 4).

The surface crosslinking step induces a crosslinking reaction on the surface of the base resin powder in the presence of a surface crosslinking agent, wherein unsaturated bonds of water soluble ethylenically unsaturated monomers not crosslinked and remaining on the surface are crosslinked by the surface crosslinking agent, thus forming super absorbent polymer with increased surface crosslinking density.

Specifically, a surface crosslink layer may be formed by a heat treatment process in the presence of a surface crosslinking agent, and by the heat treatment process, surface crosslinking density, namely external crosslinking density increases, while internal crosslinking density does not change, and thus, prepared super absorbent polymer having a surface crosslink layer may have a structure in which external crosslinking density is higher than internal crosslinking density.

Meanwhile, according to one embodiment of the invention, the surface crosslinking step may be conducted at relatively low temperature of 80 °C to 120 °C, and by thermal crosslinking at the above temperature, super absorbent polymer particles on which optimum surface crosslink layer is formed so as to have aimed high moisture content and excellent vortex time can be prepared. Preferably, the surface crosslinking temperature may be 90 °C to 110 °C or 95 °C to 105 °C.

More specifically, the above explained temperature may be set as the maximum reaction temperature, and a surface crosslinking reaction may be progressed by heat treating at such a maximum reaction temperature for 30 minutes to 80 minutes, or 40 minutes to 70 minutes.

By meeting the surface crosslinking process conditions (particularly, temperature rise condition and reaction condition at the maximum reaction temperature), super absorbent polymer appropriately meeting more excellent properties such as excellent vortex time, and the like may be prepared.

The temperature rise means for the surface crosslinking reaction are not specifically limited. A heat transfer medium may be supplied, or heat source may be directly supplied to heat. Wherein, as the heat transfer medium, temperature-increased fluid such as steam, hot air, hot oil, and the like may be used, but not limited thereto, and the temperature of supplied heat transfer medium may be appropriately selected considering the means of heat transfer medium, temperature rise speed and a target temperature. Meanwhile, as the heat source directly supplied, electric heating and gas heating may be mentioned, but not limited thereto.

Meanwhile, as the surface crosslinking agent included in the surface crosslinking agent composition, those previously used in the preparation of super absorbent polymer may be used without specific limitations. For example, the surface crosslinking agent may comprise one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate, propylene carbonate and glycerol carbonate; epoxy compounds such as ethylene glycol diglycidyl ether, and the like; oxazoline compounds such as oxazolidinone, and the like; polyamine compounds; oxazoline compounds; mono-, di- or polyoxazolidinone compounds; or cyclic urea compounds; and the like. Preferably, the surface crosslinking agent may be the same as the internal crosslinking agent, and for example, alkylene glycol diglycidyl ether-based compounds such as ethylene glycol diglycidyl ether, and the like may be used.

In the surface crosslinking step, a surface crosslinking agent composition comprising an alcohol-based solvent and water, besides the surface crosslinking agent, may be used.

Such a surface crosslinking agent may be used in an amount of 0.001 to 2 parts by weight, based on 100 parts by weight of the base resin powder. Preferably, it may be used in an amount of 0.005 parts by weight or more, 0.01 parts by weight or more, or 0.02 parts by weight or more, and 0.5 parts by weight or less, 0.3 parts by weight or less. By controlling the content range of the surface crosslinking agent within the above range, super absorbent polymer exhibiting excellent properties such as absorption performance and permeability may be prepared.

Meanwhile, the surface crosslinking agent is added to base resin powder in the form of a surface crosslinking agent composition comprising the same, and the method of adding the surface crosslinking agent composition is not specifically limited. For example, the surface crosslinking agent composition and base resin powder may be put in a reactor and mixed, or the surface crosslinking agent composition may be sprayed on the surface of base resin powder, or the surface crosslinking agent composition and base resin powder may be continuously fed to a continuously operated mixer and mixed.

And, the surface crosslinking composition may further comprise water and/or hydrophilic organic solvents as a medium. Thereby, the surface crosslinking agent may be uniformly dispersed on base resin powder. Wherein, the content of water and hydrophilic organic solvents may be controlled based on 100 parts by weight of base resin powder so as to induce uniform dissolution/dispersion of the surface crosslinking agent, prevent agglomeration of base resin powder, and optimizing surface penetration depth of the surface crosslinking agent.

Meanwhile, in the preparation method of super absorbent polymer according to one embodiment of the invention, various multivalent metal salts such as aluminum salts such as aluminum sulfate, and the like, may be further used during surface crosslinking, so as to further improve permeability, and the like. Such multivalent metal salts may be included in the surface crosslink layer of the finally prepared super absorbent polymer.

Meanwhile, super absorbent polymer particles prepared according to one embodiment of the invention may have a moisture content of 3.0 wt% to 10.0 wt%, preferably, 2.5 wt% to 8.5 wt% or 2.5 wt% to 7.5wt%. As such, since the super absorbent polymer particles have high moisture content, without additional hydration process or additive mixing process, even if additional grinding and classification processes are conducted, generation of fine particles may be remarkably reduced, and absorption properties, particularly vortex time may be improved.

Meanwhile, super absorbent polymer particles prepared according to one embodiment of the invention may have particle diameter of 150 to 850 $\mu$m. More specifically, at least 95 wt% or more of the base resin powder and super absorbent polymer comprising the same may have particle diameter of 150 to 850$\mu$m, and the content of particles having diameter of 300 to 600,um may be 50 wt% or more, and the content of particles having diameter less than 150$\mu$m may be less than 3 wt%.

(Additional steps)

The preparation method of super absorbent polymer according to one embodiment of the invention may further comprise a step of grinding and classifying the base resin powder, before the surface crosslinking step, as necessary.

Specifically, the grinding step may be conducted by grinding base resin powder to a particle size of normal particle level, namely, particle diameter of 150 $\mu$m to 850 $\mu$m

A grinder used for this purpose may be specifically, a vertical pulverizer, a turbo cutter, a turbo grinder, a rotary cutter mill, a cutter mill, a disc mill, a shred crusher, a crusher, a chopper or a disc cutter, and the like, but is not limited thereto.

And, as a grinder, a pin mill, a hammer mill, a screw mill, a roll mill, a disc mill or a jog mill, and the like may be also used, but is not limited thereto.

And, according to one embodiment of the invention, before or after the step of forming a surface crosslink layer on at least a part of the surface of base resin powder, one or more steps of a cooling step for cooling the super absorbent polymer particles, a hydrating step for introducing water in the super absorbent polymer particles, and a post treatment

step for introducing additives in the super absorbent polymer particles, may be further conducted as necessary. Wherein, the cooling step, hydrating step and post treatment step may be sequentially conducted, or simultaneously conducted.

The additives introduced in the post treatment step may include an agent for improving permeability, an anti-caking agent, an agent for improving flowability, and an anti-oxidant, and the like, but the invention is not limited thereto.

By optionally conducting the cooling step, hydrating step and post treatment step, the moisture content of the final super absorbent polymer may be improved, and super absorbent polymer products of higher qualities may be prepared.

**(Superabsorbent polymer)**

According to another embodiment of the invention, there is provided super absorbent polymer prepared by the above preparation method.

Since the super absorbent polymer prepared by the above preparation method realizes high moisture content without additional hydration process or additive introduction process, it has low fine particle content, and compared to super absorbent polymer prepared by the conventional method, it has equivalent or more excellent absorption properties such as centrifuge retention capacity(CRC) and absorbency under pressure(AUP), and simultaneously, has decreased extractable contents(EC), thus providing super absorbent polymer having excellent permeability, rewet property, and vortex time, and the like.

Hereinafter, the actions and effects of the invention will be explained in more detail through specific examples of the invention. However, these examples are presented only as the illustrations of the invention, and the scope of the right of the invention is not determined thereby.

**[Examples and Comparative Examples]**

**Example 1**

(Step 1)

In a 2L glass container equipped with a stirrer and a thermometer, 329.94g of acrylic acid, 0.35g of pentaerythritol triallyl ether internal crosslinking agent, and 725g of water were mixed, and stirred while maintaining 5°C. Into the glass container including the mixture, nitrogen was introduced at 1000cc/min for 1 hour to replace with nitrogen condition. And then, as polymerization initiators, 4.42g of 0.3% hydrogen peroxide aqueous solution, 4.94g of 1% ascorbic acid aqueous solution, and 9.90g of 2% 2,2'-azobis-(2-amidinopropane)dihydrochloride aqueous solution were introduced, and simultaneously, 4.90g of 0.01% iron sulfate aqueous solution was added as a reducing agent, thus initiating polymerization. After the temperature of the mixture reached 85°C, polymerization was conducted at 90$\pm$2°C for about 3 hours to obtain polymer.

(Step 2)

1,000g of the obtained polymer was passed 4 times through a micronizing apparatus equipped with a perforated plate comprising plural of holes each having a size of 6 mm, to micronize.

In the first micronizing step, additives were not introduced. In the second micronizing step, 400g of 32% NaOH aqueous solution was introduced to neutralize a part of the acid groups of the polymer and simultaneously micronize. In the third micronizing step, 37.5g of 15% $Na_2SO_4$ aqueous solution was introduced to neutralize a part of the acid groups of the polymer and simultaneously micronize. In the fourth micronizing step, 4g of glycerol monolaurate was introduced in the form of an aqueous solution.

(Step 3)

And then, 1,000g of the micronized mixture was introduced in a rotary kiln moving type dryer rotating at 120 rpm. While maintaining the internal temperature of the dryer at 105 °C, drying was conducted for 60 minutes to obtain resin powders. The powers were ground to particles having particle diameter of 150$\mu$m to 850$\mu$m using 2 stage roll mill (GRAN-U-LIZER™, MPE). From the ground product, base resin particles having particle diameter of 150$\mu$m to 850$\mu$m were selectively recovered using classification sieve.

The moisture content of the base resin powder was 13.6wt%.

(Step 4)

Next, 100g of the obtained base resin powders was mixed with a surface crosslinking solution prepared by introducing 8g of water, 5g of methanol, 0.08g of ethyleneglycol diglycidyl ether(EJ-1030S), 0.1g of GK(polycarboxylate), 0.4g of Als(aluminum sulfate), and 0.04g of A200(hydrophilic silica), and it was subjected to a surface crosslinking reaction at 100°C for 50 minutes to prepare super absorbent polymer comprising surface crosslinked super absorbent polymer particles.

**Example 2**

Super absorbent polymer was prepared by the same method as Example 1, except that in Example 1, the moving type drying of the step 3 was conducted at 150 °C for 30 minutes, and the moisture content of base resin powder became 12.8 wt%.

**Example 3**

Super absorbent polymer was prepared by the same method as Example 1, except that in Example 1, the moving type drying of the step 3 was conducted at 180 °C for 30 minutes, and the moisture content of base resin powder became 11.2 wt%.

**Comparative Example 1**

(Step 1)

In a 2L glass container equipped with a stirrer and a thermometer, 329.94g of acrylic acid, 0.35g of pentaerythritol triallyl ether internal crosslinking agent, and 725g of water were mixed, and stirred while maintaining 5°C. Into the glass container including the mixture, nitrogen was introduced at 1000cc/min for 1 hour to replace with nitrogen condition. And then, as polymerization initiators, 4.42g of 0.3% hydrogen peroxide aqueous solution, 4.94g of 1% ascorbic acid aqueous solution, and 9.90g of 2% 2,2'-azobis-(2-amidinopropane)dihydrochloride aqueous solution were introduced, and simultaneously, 4.90g of 0.01% iron sulfate aqueous solution was added as a reducing agent, thus initiating polymerization. After the temperature of the mixture reached 85°C, polymerization was conducted at 90±2°C for about 3 hours to obtain polymer.

(Step 2)

1,000g of the obtained polymer was passed 4 times through a micronizing apparatus equipped with a perforated plate comprising plural of holes each having a size of 6 mm, to micronize.

In the first micronizing step, additives were not introduced. In the second micronizing step, 400g of 32% NaOH aqueous solution was introduced to neutralize a part of the acid groups of the polymer and simultaneously micronize. In the third micronizing step, 37.5g of 15% $Na_2SO_4$ aqueous solution was introduced to neutralize a part of the acid groups of the polymer and simultaneously micronize. In the fourth micronizing step, 4g of glycerol monolaurate was introduced in the form of an aqueous solution.

(Step 3)

And then, 1,000g of the micronized mixture was introduced into an Air flow oven fixed-bed type dryer capable of transferring airflow upward and downward. While introducing hot air of 190 °C in the dryer upward and downward, drying was conducted for 40 minutes to obtained resin powders. The obtained powders were ground to particles having particle diameter of 150$\mu$m to 850$\mu$m using 2 stage roll mill (GRAN-U-LIZER™, MPE). From the ground product, base resin particles having particle diameter of 150$\mu$m to 850$\mu$m were selectively recovered using classification sieve.

The moisture content of the base resin powder was 2.3wt%.

(Step 4)

Next, 100g of the obtained base resin powders was mixed with a surface crosslinking solution prepared by introducing 8g of water, 5g of methanol, 0.08g of ethyleneglycol diglycidyl ether(EJ-1030S), 0.1g of GK(polycarboxylate), 0.4g of Als(aluminum sulfate), and 0.04g of A200(hydrophilic silica), and it was subjected to a surface crosslinking reaction at 100°C for 50 minutes to prepare super absorbent polymer comprising surface crosslinked super absorbent

polymer particles.

**Comparative Example 2**

In Comparative Example 1, after the drying step (step 3), to 100g of super absorbent polymer particles, 3g of water was added and uniformly mixed to conduct a hydration process, and then, surface crosslinking was conducted by the same method as Comparative Example 1, thus preparing super absorbent polymer comprising the final super absorbent polymer particles.

**Comparative Example 3**

In Comparative Example 1, after the drying step (step 3), to 100g of super absorbent polymer particles, 4g of water, 0.05g of PEG(polyethylene glycol, molecular weight: 6000), and 0.05g of Als(aluminum sulfate) were added and uniformly mixed to conduct a hydration process, and then, surface crosslinking was conducted by the same method as Comparative Example 1, thus preparing super absorbent polymer comprising the final super absorbent polymer particles.

**Comparative Example 4**

Super absorbent polymer was prepared by the same method as Example 1, except that the moving type drying of the step 3 was conducted at 120 °C for 10 minutes, and the moisture content of base resin powder became 31.7 wt%.

**[Experimental Example]**

For the super absorbent polymer prepared in Examples and Comparative Examples, the properties were evaluated as follows, and the results were shown in Table 1.

Unless otherwise indicated, all the following property evaluations were progressed at constant temperature constant humidity(23±1°C, relative humidity 50±10%), and a physiological saline or brine means an aqueous solution of 0.9 wt% sodium chloride(NaCl).

(1) Moisture content

A moisture content is the content of moisture occupied, based on the total weight of super absorbent polymer, and was calculated according to the following Mathematical Formula 1.

Specifically, while raising the temperature of super absorbent polymer and drying through infrared heating, weight decrease according to the evaporation of moisture in the super absorbent polymer was measured to calculate the moisture content. Wherein, drying conditions were set such that a temperature was increased from room temperature to 180 °C and then maintained at 180°C, and the total drying time was 40 minutes including the temperature rise step of 5 minutes. Before/after drying, the weights of super absorbent polymer were respectively measured, and the moisture content was calculated according to the following Mathematical Formula 1.

[Mathematical Formula 1]

$$\text{Moisture content(wt\%)} = [(Ao - At) / Ao] \times 100$$

In the Formula, At is the weight of super absorbent polymer after drying, and Ao is the weight of super absorbent polymer before drying.

(2) Particle distribution

The super absorbent polymers prepared in Examples were classified using standard sieves having gradations of 850 μm(#20), 600 μm(#30), 300 μm (#50), and 150 μm(#100), and the weight of coarse particles having particle diameter greater than 850 μm was measured, and then, the content of coarse particles was expressed as a percentage based on the total weight of the super absorbent polymer particle sample (wt%).

And, average particle diameter was calculated by multiplying the percentage by average particle size.

(3) Centrifuge Retention Capacity (CRC)

For each super absorbent polymer prepared in Examples, samples having particle diameter of 150 to 850$\mu$m were taken, and centrifuge retention capacity(CRC) by absorption rate under no load was measured according to European Disposables and Nonwovens Association (EDANA) standard EDANA WSP 241.3.

Specifically, from each polymer obtained in Examples, polymer classified with a sieve of #30-50 was obtained. W0(g) (about 0.2g) of such polymer was uniformly put in an envelope made of non-woven fabric, and sealed, and then, soaked in physiological saline (0.9 wt%) at room temperature. After 30 minutes, the envelop was drained under 250G for 3 minutes using a centrifuge, and the weight of the envelope, W2(g), was measured. And, the same operation was conducted without polymer, and the weight at that time, W1(g), was measured. Using the obtained weights, CRC(g/g) was calculated according to the following Mathematical Formula 2.

[Mathematical Formula 2]

$$CRC\ (g/g) = \{[W2(g) - W1(g)]/W0(g)\} - 1$$

(4) Absorbency Under Pressure (AUP)

For each super absorbent polymer of Examples and Comparative Example, absorbency under pressure of 0.3 psi was measured according to EDANA method WSP 242.3. When measuring absorbency under pressure, the classified polymer used for CRC measurement was used.

Specifically, on the bottom of a plastic cylinder having an inner diameter of 25 mm, 400 mesh wire netting made of stainless was installed. Under room temperature and 50% humidity conditions, W0(g) (0.16 g) of super absorbent polymer was uniformly scattered on the wire netting, and a piston having an outer diameter slightly smaller than 25 mm, capable of uniformly applying a load of 0.3 psi, was installed such that there was no gap with the inner wall of the cylinder, and up and down movement was not hindered. At this time, the weight of the apparatus, W3(g), was measured.

Inside of a petri dish having a diameter of 150 mm, a glass filter having a diameter of 90 mm and a thickness of 5 mm was placed, and physiological saline consisting of 0.9 wt% sodium chloride was poured to the same level of the upper side of the glass filter. One piece of a filter paper having a diameter of 90 mm was put thereon. On the filter paper, the above measurement apparatus was laid, and liquid was absorbed under load for 1 hour. After 1 hour, the measurement apparatus was raised, and the weight W4(g) was measured.

Using the obtained weights, absorbency under pressure(g/g) was calculated according to the following Mathematical Formula 3.

[Mathematical Formula 3]

$$AUP(g/g) = [W4(g) - W3(g)]/W0(g)$$

The measurement was repeated 5 times, and the average and standard deviation were calculated.

(5) Vortex time

A vortex time was measured as the unit of seconds, according to the method described in International Patent Publication No. 1987-003208. When measuring a vortex time, polymer obtained after surface crosslinking was used without classification.

Specifically, in 50 mL of physiological saline of 23 °C, 2g of each super absorbent polymer was introduced, and stirred with a magnetic bar(diameter 8 mm, length 30 mm) at 600 rpm, and a time taken until vortex disappeared was measured as the unit of seconds, to calculate a vortex time.

[Table 1]

| | Moisture content of the final super absorbent polymer (wtt%) | #20 (wt%) | CRC (g/g) | 0.3 AUP (g/g) | Vortex (sec) |
|---|---|---|---|---|---|
| Example 1 | 6.1 | 0.1 | 35.1 | 32.5 | 26 |
| Example 2 | 4.7 | 0.2 | 35.2 | 32.7 | 26 |

(continued)

| | Moisture content of the final super absorbent polymer (wtt%) | #20 (wt%) | CRC (g/g) | 0.3 AUP (g/g) | Vortex (sec) |
|---|---|---|---|---|---|
| Example 3 | 3.0 | 0.2 | 35.0 | 32.2 | 27 |
| Comparative Example 1 | 1.1 | 0.2 | 34.2 | 30.7 | 32 |
| Comparative Example 2 | 2.2 | 3.2 | 34.0 | 29.7 | 32 |
| Comparative Example 3 | 2.9 | 0.7 | 33.4 | 28.9 | 31 |
| Comparative Example 4 | 8.9 | 28.7 | 30.3 | 21.1 | 41 |

As shown in the data of Table 1, it can be confirmed that according to the invention, by controlling the process conditions of a drying step, the finally prepared super absorbent polymer has high moisture content, and thus, generation of fine particles may be inhibited during the preparation process, and simultaneously, excellent vortex time may be realized.

## Claims

**1.** A method for preparing super absorbent polymer comprising steps of:

conducting crosslinking polymerization of water soluble ethylenically unsaturated monomers having acid groups in the presence of an internal crosslinking agent and a polymerization initiator to form hydrogel polymer (step 1);
micronizing the hydrogel polymer in the presence of a surfactant to prepare a mixture comprising micronized hydrogel polymer (step 2);
drying the mixture at 100 °C to 250 °C by moving type drying to form base resin powder having a moisture content of 10 wt% to 30 wt% (step 3);
thermally crosslinking the surface of the base resin powder in the presence of a surface crosslinking agent to prepare super absorbent polymer particles (step 4).

**2.** The method for preparing super absorbent polymer according to claim 1, wherein the step of moving type drying (step 3) is conducted by introducing the mixture into a moving type dryer rotating at a speed of 30 rpm to 300 rpm.

**3.** The method for preparing super absorbent polymer according to claim 1, wherein the step of moving type drying (step 3) is conducted using a moving type dryer selected from s a horizontal-type mixer, a rotary kiln, a paddle dryer or a steam tube dryer.

**4.** The method for preparing super absorbent polymer according to claim 1, wherein the step of moving type drying (step 3) is conducted for 30 minutes to 120 minutes.

**5.** The method for preparing super absorbent polymer according to claim 1, wherein the step of forming hydrogel polymer (step 1) comprises steps of:

conducting crosslinking polymerization of water soluble ethylenically unsaturated monomers having acid groups in the presence of an internal crosslinking agent and a polymerization initiator to form polymer (step 1-1); and
neutralizing at least a part of the acid groups of the polymer to form hydrogel polymer (step 1-2).

**6.** The method for preparing super absorbent polymer according to claim 1, wherein the step of forming hydrogel polymer (step 1) comprises steps of:

neutralizing at least a part of the acid groups of water soluble ethylenically unsaturated monomers having acid groups (step 1-1'); and

conducting crosslinking polymerization of the water soluble ethylenically unsaturated monomers having acid groups, at least a part of said acid groups being neutralized, in the presence of an internal crosslinking agent and a polymerization initiator, to form hydrogel polymer (step 1-2').

**7.** The method for preparing super absorbent polymer according to claim 1, wherein the micronizing hydrogel polymer in step 2 is conducted by pushing the hydrogel polymer through a perforated plate equipped with plural of holes.

**8.** The method for preparing super absorbent polymer according to claim 7, wherein the size of each hole formed in the perforated plate is 0.1 mm to 30 mm.

**9.** The method for preparing super absorbent polymer according to claim 1, wherein at least a part of the surfactant exists on the surface of the hydrogel polymer.

**10.** The method for preparing super absorbent polymer according to claim 1, wherein the surfactant is one or more selected from the group consisting of a compound represented by the following Chemical Formula 1 and salts thereof:

[Chemical Formula 1]

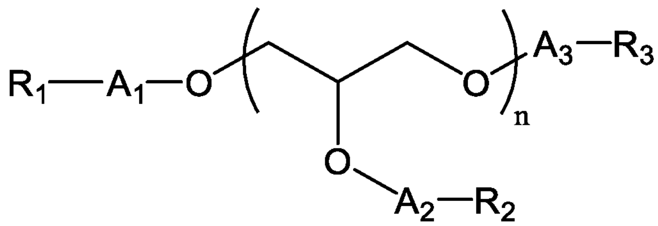

in the Chemical Formula 1,

$A_1$, $A_2$ and $A_3$ are each independently, a single bond, carbonyl,

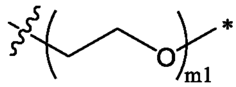
,

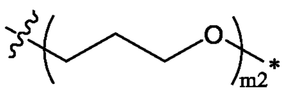
or
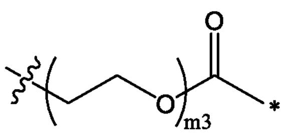
,

provided that one or more of them are carbonyl or

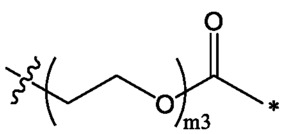
,

wherein m1, m2 and m3 are each independently, an integer of 1 to 8, each

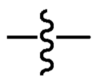

is connected to adjacent oxygen atom, and each

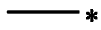

is connected to adjacent $R_1$, $R_2$ and $R_3$,

$R_1$, $R_2$ and $R_3$ are each independently, hydrogen, C6-18 linear or branched alkyl or C6-18 linear or branched alkenyl, and

n is an integer of 1 to 9.

**11.** The method for preparing super absorbent polymer according to claim 1, wherein the surface crosslinking in step 4 is conducted at 80°C to 120 °C.

**12.** The method for preparing super absorbent polymer according to claim 1, wherein the surface crosslinking in step 4 is conducted for 30 minutes to 120 minutes.

**13.** The method for preparing super absorbent polymer according to claim 1, wherein a moisture content of the super absorbent polymer particles is 3.0wt% to 10.0wt%.

**14.** Super absorbent polymer prepared by the preparation method of claim 1.

**INTERNATIONAL SEARCH REPORT**

International application No.
**PCT/KR2022/008709**

**A. CLASSIFICATION OF SUBJECT MATTER**

**C08J 3/24**(2006.01)i; **C08J 3/12**(2006.01)i; **C08J 3/075**(2006.01)i; **C08F 220/06**(2006.01)i; **B29B 9/12**(2006.01)i; **C08F 2/01**(2006.01)i

According to International Patent Classification (IPC) or to both national classification and IPC

**B. FIELDS SEARCHED**

Minimum documentation searched (classification system followed by classification symbols)

C08J 3/24(2006.01); B02C 18/14(2006.01); C08F 2/00(2006.01); C08F 6/06(2006.01); C08J 3/075(2006.01); C08J 3/12(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고흡수(absorbent, super-absorbent, SAP), 아크릴레이트(acrylate), 계면활성제(surfactant), 미립화(grind, atomize, pulverize, mill, crush), 유동식 건조(moving type dry), 열가교(thermal-crosslinking)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0077541 A (NIPPON SHOKUBAI CO., LTD.) 03 July 2019 (2019-07-03) See abstract; claims 1-3, 17-19, 23-25 and 35-39; paragraphs [0110], [0112], [0152], [0180], [0239], [0263], [0264], [0278], [0338], [0401]-[0405], [0426], [0460], [0462] and [0476]; and figures 1 and 2. | 1-14 |
| X | JP 2016-124901 A (NIPPON SHOKUBAI CO., LTD.) 11 July 2016 (2016-07-11) See claims 1 and 6-8; and paragraphs [0037], [0085], [0086], [0093], [0094], [0128] and [0179]-[0197]. | 1-9,11-14 |
| A | JP 59-030826 A (CASSELLA FARBWERKE MAINKUR AG) 18 February 1984 (1984-02-18) See claim 1; and page 4, the top of the left column. | 1-14 |
| A | KR 10-2016-0149235 A (SONGWON INDUSTRIAL CO., LTD.) 27 December 2016 (2016-12-27) See claims 1-30. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 September 2022** | **23 September 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**

International application No.
**PCT/KR2022/008709**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0055648 A (LG CHEM, LTD.) 21 May 2020 (2020-05-21)<br>See claims 1-14. | 1-14 |

Form PCT/ISA/210 (second sheet) (July 2019)

**INTERNATIONAL SEARCH REPORT**
**Information on patent family members**

International application No.
**PCT/KR2022/008709**

| Patent document cited in search report | Publication date (day/month/year) | Patent family member(s) | Publication date (day/month/year) |
|---|---|---|---|
| KR 10-2019-0077541 A | 03 July 2019 | CN 109996833 A | 09 July 2019 |
| | | CN 109996833 B | 11 February 2022 |
| | | CN 109996835 A | 09 July 2019 |
| | | EP 3543279 A1 | 25 September 2019 |
| | | EP 3543280 A1 | 25 September 2019 |
| | | JP 2019-052285 A | 04 April 2019 |
| | | JP 6800998 B2 | 16 December 2020 |
| | | JP 6913107 B2 | 04 August 2021 |
| | | JP 6918407 B2 | 11 August 2021 |
| | | KR 10-2019-0077540 A | 03 July 2019 |
| | | US 2019-0329219 A1 | 31 October 2019 |
| | | US 2019-0329220 A1 | 31 October 2019 |
| | | WO 2018-092863 A1 | 24 May 2018 |
| | | WO 2018-092864 A1 | 24 May 2018 |
| JP 2016-124901 A | 11 July 2016 | JP 6425341 B2 | 21 November 2018 |
| JP 59-030826 A | 18 February 1984 | DE 3221947 A1 | 22 December 1983 |
| | | EP 0096790 A1 | 28 December 1983 |
| | | EP 0096790 B1 | 16 December 1987 |
| | | JP 03-73576 B2 | 22 November 1991 |
| KR 10-2016-0149235 A | 27 December 2016 | CN 106232235 A | 14 December 2016 |
| | | CN 106232235 B | 28 June 2019 |
| | | EA 032199 B1 | 30 April 2019 |
| | | EA 201691535 A1 | 28 February 2017 |
| | | KR 10-2389682 B1 | 22 April 2022 |
| | | WO 2015-163508 A1 | 29 October 2015 |
| KR 10-2020-0055648 A | 21 May 2020 | CN 111436201 A | 21 July 2020 |
| | | EP 3680277 A1 | 15 July 2020 |
| | | JP 2021-510741 A | 30 April 2021 |
| | | JP 6973874 B2 | 01 December 2021 |
| | | KR 10-2418591 B1 | 07 July 2022 |
| | | US 2021-0147640 A1 | 20 May 2021 |
| | | WO 2020-101167 A1 | 22 May 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210079644
- KR 1020210080336
- KR 1020220074722
- WO 1987003208 A


### Non-patent literature cited in the description


- **REINHOLD SCHWALM.** UV Coatings: Basics, Recent Developments and New Application. Elsevier, 2007, 115
- **ODIAN.** Principle of polymerization. Wiley, 1981, 203